# EUROPÄISCHE PATENTSCHRIFT

(11) **EP 3 662 002 B1**
(45) Veröffentlichungstag und Bekanntmachung des Hinweises auf die Patenterteilung: **27.10.2021**
(21) Anmeldenummer: 18742513.7
(22) Anmeldetag: 25.07.2018
(51) Int. Cl.: C08J 9/12, C08J 9/14, C08J 9/16, C08J 9/232, B29B 7/88, B29B 9/06, B29C 44/34

(54) **EXPANDIERBARE, TREIBMITTELHALTIGE GRANULATE AUF BASIS VON HOCHTEMPERATURTHERMOPLASTEN**
EXPANDABLE GRANULATES CONTAINING PROPELLANT ON THE BASIS OF HIGH-TEMPERATURE THERMOPLASTIC
GRANULATS EXPANSÉS PRÉ-GAZÉIFIÉS À BASE DE MATIÈRES THERMOPLASTIQUES RÉSISTANTES AUX HAUTES TEMPÉRATURES

(30) Priorität: 04.08.2017 EP 17184924
(43) Veröffentlichungstag der Anmeldung: 10.06.2020
(73) Patentinhaber: BASF SE, 67056 Ludwigshafen am Rhein (DE)
(72) Erfinder: QUEIROZ DA FONSECA, Isa Alexandra, 67056 Ludwigshafen (DE); GUTMANN, Peter, 67056 Ludwigshafen (DE); BRAEUER, Judith, 67056 Ludwigshafen (DE); GRAESSEL, Georg, 67056 Ludwigshafen (DE); BIRLI, Rainer, 67056 Ludwigshafen (DE); SCHMIDT, Markus, 67056 Ludwigshafen (DE); BURKHART, Sibylle, 67056 Ludwigshafen (DE); KELLER, Angelika, 67056 Ludwigshafen (DE); HENNENBERGER, Florian, 67056 Ludwigshafen (DE)
(74) Vertreter: BASF IP Association
(86) Internationale Anmeldenummer: PCT/EP2018/070084
(87) Internationale Veröffentlichungsnummer: WO 2019/025245

(56) Entgegenhaltungen:
- EP-A2- 0 411 437
- WO-A1-2016/052604

## Beschreibung

Die vorliegende Erfindung betrifft Verfahren zur Herstellung von expandierbaren, treibmittelhaltigen Granulaten auf Basis von Hochtemperaturthermoplasten sowie daraus erhältliche Partikelschaumstoffe und deren Verwendung zur Herstellung von Bauteilen für die Luftfahrt.

Die WO 2013/092689 beschreibt ein Verfahren zur Herstellung von Schaumstoffplatten durch Extrusion einer treibmitttelbeladenen Polymerschmelze aus Polyphenylenethersulfon (PPSU). Bevorzugt wird eine Mischung von Isopropanol als Treibmittel eingesetzt. Die erhaltene Schaumstoffplatte wurde anschießend unter Vakuum und Temperatur in eine Form zu einem geformten Schaumstoffformteil umgeformt.

Die WO 2014/057042 beschreibt einen hochtemperaturbeständigen Schaumstoff mit homogener Zellgrößenverteilung auf Basis von einer Mischung von Polyethersulfonen.

Die EP 1 333 051 A2 beschreibt ein Verfahren zur Herstellung von Schaumstoffbahnen aus hochtemperaturbeständigen Polysulfonen oder Polyethersulfonen duch Schaumextrusion einer Mischung aus einem Polysulfon oder einem Polyethersulfon und einem flüchtigen Treibmittel. Als Treibmittel wird bevorzugt Wasser oder eine Mischung von Wasser mit einem Alkohol oder einem Keton verwendet.

Die EP 0 411 437 beschreibt ein Verfahren zur Herstellung von expandierbarem Granulat auf der Basis von Polyarylethersulfonen, enthaltend 5 bis 20 Gew.-%, bezogen auf das Granulat, Methylethylketon oder Aceton als Treibmittel, wobei das Treibmittel und die Polymeren in einem Extruder bei einer Gehäusetemperatur von mindestens 50°C und maximal 170°C gemischt und anschließend direkt in eine Medium mit einer Temperatur von weniger als 40°C extrudiert werden. Dieses Verfahren ist auf niedrige Durchsätze beschränkt. Die Granulate werden in einer Tauchkantenform zu 10 mm dicken, treibmittelhaltigen Platten verpresst und anschließend zu einem 20 cm dicken Schaumblock aufgeschäumt. Die Zelldurchmesser liegen im Bereich von 0,2 bis 0,8 mm.

Die WO 2016/052604 bzw. EP 3 202 837 A1 beschreibt ein Verfahren zur Herstellung von Partikelschaumstoffen durch Versintern von Schaumstoffpartikeln aus einem Polymeren mit einer Glasübergangstemperatur von mindestens 180°C, insbesondere Polyethersulfon (PESU), Polyetherimid (PEI), Polyphenylsulfon (PPSU) oder Polysulfon (PSU). Die Schaumstoffpartikel weisen bevorzugt eine Dichte im Bereich von 40 bis 900 kg/m³ und mittlere Zelldurchmesser im Bereich von 180 - 1500 µm auf. Die daraus erhaltenen Partikelschaumstoffe weisen eine hohe Offenzelligkeit im Bereich von 33 bis 64% auf.

Aufgabe der vorliegenden Erfindung war es, ein Verfahren zur Herstellung von lagerstabilen expandierbaren Granulaten auf Basis von hochtemperaturbeständigen Polymeren, insbesondere Polyethersulfonen, bereitzustellen, die über mehrere Wochen Lagerzeit einen geringen Treibmittelverlust aufweisen und zu Schaumpartikeln oder Partikelschaumstoffen mit niedriger Dichte verschäumt bzw. verschweißt werden können. Außerdem sollten die expandierbaren Granulate mit hohen Durchsätzen erhältlich und auf einfache Weise zu Partikelschaumstoffen mit homogener, feinzelliger Zellstruktur verarbeitbar sein.

Die Aufgabe wurde durch das Verfahren zur Herstellung von expandierbaren, treibmittelhaltigen Granulaten auf Basis von Hochtemperaturthermoplasten gemäß Anspruch 1 und Partikelschaumstoffen nach Anspruch 9 gelöst.

Bevorzugte Ausführungsformen sind den Unteransprüchen zu entnehmen.

Bevorzugt sind die expandierbaren Granulat kugelförmig. Kugelförmig bedeutet, dass die Granulate keine Ecken oder Kanten, wie beispielsweise zylinderförmige Stranggranulate aufweisen. Das Verhältnis von kürzestem zu längstem Durchmesser der kugelförmigen Granulate liegt bevorzugt im Bereich von 0,9 bis 1,0, besonders bevorzugt im Bereich von 0,95 bis 0,99. Aufgrund der Kugelform können die bevorzugten expandierbaren, treibmittelhaltigen Granulate und die durch vorschäumen erhältlichen Schaumstoffpartikel durch pneumatische Förderanlagen leicht gefördert und in Schaumstoffformen eingeblasen werden.

Die expandierbaren, treibmittelhaltigen Granulate auf Basis von Hochtemperaturthermoplasten weisen einer Schüttdichte nach DIN ISO 697:1982 im Bereich von 400 bis 900 kg/m³, bevorzugt im Bereich von 450 bis 700 kg/m³ und besonders bevorzugt im Bereich von 500 bis 680 kg/m³ .Sie weisen einer Masse im Bereich von 1 bis 10 mg/Granulat, bevorzugt im Bereich von 2 bis 4 mg/Granulat auf.

Als Hochtemperaturthermoplasten eigen sich thermoplastische Polymere mit einer Glasüberganstemperatur von mindestens 180°C, bevorzugt im Bereich von 200 bis 240°C, bestimmt mittels DSC nach ISO 11357-2-1999(E) mit einer Aufheizrate von 10 K/min. Bevorzugt ist der Hochtemperaturthermoplast mindestens ein Polyethersulfon oder Mischungen von Polyethersulfonen mit unterschiedlichem gewichtmittleren Molekulargewicht M_{w} oder mit unterschiedlichen Viskositätszahlen. Bevorzugt werden Mischungen von einem Polyethersulfon mit einer Viskositätszahl im Bereich von 46 bis 50 cm³/g und einem Polyethersulfon mit einer Viskositätszahl im Bereich von 54 bis 58 cm³/g, gemessen nach ISO 307, 1157,1628 (in 0,01 g/ml Phenol/1,2, ortho-Dichlorbenzol, 1:1) eingesetzt.

Als Treibmittel enthalten die expandierbaren Granulate Alkohole, Ketone oder Kohlenwasserstoffe mit 1 bis 4 Kohlenstoffatomen, bevorzugt Aceton, Methylethylketon, Ethanol, Isopropanol, Isobutan, Wasser oder Mischungen davon in Mengen von 3 bis 15 Gew.-%, bevorzugt in Mengen von 5 bis 10 Gew.-%, Besonders bevorzugt enthalten die expandierbaren Granulate 3 bis 10 Gew.-% Aceton.

Überraschend konnte gefunden werden, dass die Schüttdichte der expandierbaren Granulate einen Einfluss auf das Treibmittelhaltevermögen / Lagerstabilität besitzt und somit auch die erzielbare Dichtereduktion beim Vorschäumen beeinflusst.

Sowohl die expandierbaren Granulate als auch die expandierten Schaumstoffpartikel enthalten als Nukleierungsmittel bevorzugt Talkum, Titandioxid, Graphit, Ruß oder Mischungen davon. Bevorzugt enthalten sowohl expandierbaren Granulate als auch die expandierten Schaumstoffpartikel als Nukleierungsmittel 0,01 bis 2,0 Gew.-%, besonders bevorzugt 0,05 bis 1,5 Gew.-% Talkum, Titandioxid, Graphit, Ruß oder Mischungen davon, bezogen auf die Summe von Hochtemperaturthermoplast und Nukleierugnsmittel.

Sowohl die expandierbaren Granulate als auch die expandierten Schaumstoffpartikel enthalten bevorzugt ausschließlich mindestens ein Polyethersulfon als Hochtemperaturthermoplast.

Gegenstand der Erfindung ist auch ein Verfahren zur Herstellung von expandierbaren, treibmittelhaltigen Granulaten auf Basis von Hochtemperaturthermoplasten umfassend die Stufen:
a) Herstellen einer Polymerschmelze durch Aufschmelzen von mindestens einem Polymer mit einer Glasübergangstemperatur nach ISO 11357-2-1999 von mindestens 180°C und Vermischen mit mindestens einem Nukleierungsmittel in einem Extruder bei Temperaturen im Bereich von 300° bis 350°C,
b) Zugabe eines Treibmittels zu der Polymerschmelze
c) Abkühlen der Polymerschmelze auf eine Temperatur im Bereich von 180° bis 250°C,
d) gegebenenfalls Fördern der Polymerschmelze über eine Zahnradpumpe
e) ) Fördern der treibmittaltigen Polymerschmelze bei einer Temperatur im Bereich von 180° bis 250°C durch eine Lochplatte und Granulieren der treibmittelbeladenen Polymerschmelze in einem bei einer Wassertemperatur im Bereich von 75 bis 99°C und einem Druck im Bereich von 10 bis 20 bar betriebenen Unterwassergranulator.

Die Stufen b) und c) können gleichzeitig oder nacheinander ausgeführt werden. Bevorzugt wird die Stufe c) nach der Stufe b) durchgeführt. Das bedeutet, die treibmittelhaltige Polymerschmelze wird durch die Zugabe des Treibmittels und/oder externe Kühlung auf eine Temperatur im Bereich von 180°C bis 250°C abgekühlt. Auf diese Weise kann die treibmittelhaltige Polymerschmelze mit einer Schmelzetemperatur im Bereich von 180°C bis 250°C durch eine beheizte Lochplatte gefördert und granuliert werden.

Als Treibmittel können in dem erfindungsgemäßen Verfahren Alkohole, Ketone oder Kohlenwasserstoffe mit 1 bis 4 Kohlenstoffatomen, bevorzugt Aceton, Methylethylketon, Ethanol, Isopropanol, Isobutan, Wasser oder Mischungen davon in Mengen von 3 bis 15 Gew.-%, bevorzugt in Mengen von 5 bis 10 Gew.-%, bezogen auf die Polymerschmelze einschließlich ihrer Additive, eingesetzt werden. Besonders bevorzugt werden 3 bis 10 Gew.-% Aceton zur Polymerschmelze zugegeben.

Als Additive können der Polymerschmelze Nukleierungsmittel oder Flammschutzmittel zugegeben werden. Bevorzugt werden Talkum, Titandioxid, Graphit, Russ oder Mischungen davon eingesetzt.

Als Hochtemperaturthermoplasten werden in dem erfindungsgemäßen Verfahren die oben beschriebenen Thermoplasten eingesetzt. Bevorzugt wird als Hochtemperaturthermoplast mindestens ein Polyethersulfon oder Mischungen von Polyethersulfonen mit unterschiedlichem gewichtmittleren Molekulargewicht M_{w} oder mit unterschiedlichen Viskositätszahlen. Bevorzugt werden Mischungen von einem Polyethersulfon mit einer Viskositätszahl im Bereich von 46 bis 50 cm³/g und einem Polyethersulfon mit einer Viskositätszahl im Bereich von 54 bis 58 cm³/g, gemessen nach ISO 307, 1157,1628 (in 0,01 g/ml Phenol/1,2, ortho-Dichlorbenzol, 1:1) eingesetzt.

Die hohe Schüttdichte der expandierbaren Granulate im Bereich von 400 bis 900 kg/m³ konnte hierbei durch einen hohen Wasserdruck in der Unterwassergranulierung und die Wahl des Treibmittels und deren Konzentration sowie das Temperaturprofil in der Extrusionsanlage mit Unterwassergranulierung erzielt werden.

Die expandierten Schaumstoffpartikel auf Basis von Hochtemperaturthermoplasten enthalten mindestens ein Nukleierungsmittel und weisen eine Schüttdichte nach DIN ISO 697:1982 im Bereich von 10 bis 200 kg/m³auf.

Der mittlere Zelldurchmesser der erfindungsgemäßen expandierten Schaumstoffpartikel liegt in der Regel im Bereiche von 30 bis 150 µm, bevorzugt im Bereich von betrug 50 bis 100 µm. Bevorzugt weisen 90% der Zellen, besonders bevorzugt 99% der Zellen einen Zelldurchmesser von weniger als 150 µm auf. Das mittlere Länge/Breite-Verhältnis liegt bevorzugt unter 2,0, besonders bevorzugt unter 1,6.

Diese können durch Vorschäumen der expandierbaren Partikel erhalten werden. Hierzu eignet sich ein Verfahren zur Herstellung von Schaumstoffpartikeln auf Basis von Hochtemperaturthermoplasten, bei dem man die oben beschriebenen, expandierbaren, treibmittelhaltigen Granulate, z. B. in einem Umluftofen, für 5 bis 300 Sekunden, bevorzugt 10 bis 150 Sekunden bei Temperaturen im Bereich von 180 bis 280°C, bevorzugt im Bereich von 220° bis 250°C verschäumt.

Aus den so erhältlichen expandierten Schaumpartikeln lassen sich Partikelschaumstoffformteile durch Verschweißen erhalten. Hierfür eignen sich Verfahren zur Herstellung eines Partikelschaumstoffes auf Basis von Hochtemperaturthermoplasten, bei denen man die oben beschriebenen expandierbaren, treibmittelhaltigen Granulate nach oder expandierten Schaumstoffpartikel in einer Form mittels Wasserdampf, Heißluft, IR- oder elektromagnetischer Strahlung oder Heißpressen verschweißt.

Die so erhaltenen Partikelschaumstoffe sind in der Regel geschlossenzellig. Sie weisen bevorzugt eine Dichte im Bereich von 20 bis 250 kg/m³, besonders bevorzugt im Bereich von 40 bis 150 kg/m³auf.

Die Schaumstoffpartikel eignen sich insbesondere in Verbundplatten für Luftfahrtanwendungen.

Aufgrund der hohen Schüttdichte der nach dem erfindungsgemäßen Verfahren erhaltenen expandierbaren treibmittelhaltigen Granulate und guten Lagerstabilität aufgrund des geringen Treibmittelverlustes, können diese mit geringen Transportkosten auch über weitere Transportstrecken an verarbeitende Betriebe geliefert werden, die diese zu expandierten Schaumstoffpartikeln vorschäumen und anschließend zu Schaumstoffformteilen beliebiger dreidimensionaler Formen verarbeiten können.

### Beispiele

Eingesetzte Rohstoffe:

| | |
|---|---|
| PESU | |
| Ultrason E0510 | Polyethersulfon (PESU) der Firma BASF SE, Dichte 1370 kg/m³, Viskositätszahl 40 cm³/g (in 0,01 g/ml Phenol/1,2-ortho-dichlorbezol, 1:1), Glassübergangstemperatur DSC (10°C/min) 222°C) |
| Ultrason E1010 | Polyethersulfon (PESU) der Firma BASF SE, Dichte 1370 kg/m³, Viskositätszahl 48 cm³/g (in 0,01 g/ml Phenol/1,2-ortho-dichlorbezol, 1:1), Glassübergangstemperatur DSC (10°C/min) 222 °C) |
| Ultrason E2010 | Polyethersulfon (PESU) der Firma BASF SE, Dichte 1370 kg/m³, Viskositätszahl 56 cm³/g (in 0,01 g/ml Phenol/1,2-ortho-dichlorbezol, 1:1), Glassübergangstemperatur DSC (10°C/min) 225 °C) |
| Talkum | Microtalk IT extra, Mondo Minerals, mittlere Partikelgröße d50% < 2µm) |
| Graphit | Graphit Kropfmühl AG, Mittlere Partikelgröße d50% = 4,8 µm) |
| TiO2 | Kronos 2220, CAS 13463-67-7 |
| Treibmittel | Aceton (Aceton 99,97% (Rest ist Wasser) Firma Domo) |

### Analysen:

Die Schüttdichte der treibmittelhaltigen, expandierbaren Granulate wurde nach DIN ISO 697:1982 bestimmt.

Der Treibmittelgehalt der expandierbaren Granulate wurde gravimetrisch als flüchtige Anteile bestimmt. Hierzu wurden ca. 20 g der treibmittlelhaltigen Granulate in ein Aluminumschälchen eingewogen und im Umluftofen bei 250°C für mindestens 2 Stunden getrocknet und zurückgewogen.

Die Druckspannungen wurden nach DIN EN ISO 844:2014 bestimmt.

Die Bestimmung der Zellgrößenverteilung und mittleren Zelldurchmesser erfolgte durch Bildaufnahme des Querschnittes der Schaumpartikel mit einer Kamera und Auswertung mit einem PORE!SCAN der Fa. Goldlücke Ingenieurleistungen. Hierzu wurden 10 Schaumpartikel mit doppelseitigem Klebeband auf eine Pressspanplatte (10x10 cm) aufgebracht und in der Mitte durchgeschnitten. Zur Bestimmung der mittleren Zellflächen und mittleren Zelldurchmesser wurden ca. 1500 Zellen ausgewertet.

Beispiele 2-16 und 24-26, Vergleichsbeispiele V3 und V17-V23 Herstellung von expandierbaren PESU-Granulaten durch Schmelzeimprägnierung Die Schmelzeimprägnierung erfolgte in einer Apparatur bestehend aus einem in acht gleich langen Zonen (Z1...Z8) unterteilten Doppelschneckenextruder der Firma Leistritz mit 18 mm Schneckendurchmesser und einem Längen zu Durchmesserverhältnis von 40, einer Schmelzepumpe (Zahnradpumpe ZRP), Anfahrventil (AV), Schmelzefilter, Lochplatte (LP) und einer Unterwassergranulierung (UWG).

Polyethersulfon (PESU) wurde zusammen mit den Additiven (Talkum, Titandioxid, Graphit) in einem Polyethylen-Beutel vermischt in den Doppeschneckenextruders dosiert und aufgeschmolzen. Nach ca. 2/3 der Länge des Extruders wurde das Treibmittel mit Hilfe von Isco-Pumpen (Kolbenpumpen der Firma Axel Semrau) und einem in den Extruder eingebauten Injektor in Zone Z5 in den Extruder injiziert. Ab Zone Z6 wurde die Polymerschmelze über die Temperierung des Doppelschneckenextruders gekühlt. Die Temperatur der Polymerschmelze beim Durchtritt durch die Lochplatte entsprach der an Zone 8 eingestellten Temperatur. Mittels der Schmelzepumpe (ZRP) wurde das Druckprofil im Extruder so eingestellt (Druck-Drehzahl-Steuerung), dass das Treibmittel vollständig in die Polymerschmelze eingemischt wurde. Neben der Einstellung des Druckprofils in dem Doppelschneckenextruder dient die Schmelzepumpe auch zur Förderung der Treibmittel-imprägnierten Polymerschmelze durch die Nachfolgeeinrichtungen (das Anfahrventil, das Schmelzesieb und die Lochplatte). Der durch die Lochplatte (1 Loch mit 1,0 mm Durchmesser) austretende Schmelzestrang wurde in dem Unterwassergranulator (UWG) unter Druck zu expandierbaren Polyerthersulfongranulaten mit einem Granulatgewicht von ca. 2,3 mg geschnitten. Dabei wurde der Gesamtdurchsatz des Extruders konstant bei 5 kg/h gehalten. Der Strang in der Wasserbox wurde durch 10 am Messerkranz befestigte Messer geschnitten. Der Messerkranz rotiert dabei mit 3600 U/min in den Beispielen 2-12 und Vergleichsbeispiel V3. Dabei entstehen expandierbare Granulate mit einem Granulatgewicht von 2,3 mg, welche durch den Wasserkreislauf von der Lochplatte in den Trockner transportiert werden und von dort in einen Auffangbehälter (hier Weißblechkanne) abgeschieden werden.

Die Gewichtsanteile der eingesetzten Rohstoffe sind in Tabelle 1 zusammengestellt. Die Gewichtsanteile beziehen sich auf 100 Gew.-% Feststoff (Polymer und Additive ohne Treibmittel). Der Treibmittelanteil bezieht sich auf 100 Gew.-% Feststoff (Polymer und Additive). Die Prozessparameter sind in Tabelle 2 zusammengestellt. Die Temperaturen beziehen sich auf die an den jeweiligen Apparateteilen eingestellten und gemessenen Temperaturwerte.

In den Beispielen 2-12, 24 und in den Vergleichsbeispielen V3, V17, V20-V23 wurde Aceton als Treibmittel eingesetzt. In den Beispielen 13 - 16 und in den Vergleichsbeispielen V18-V19 wurden Mischungen von Aceton mit Wasser, Ethanol oder Isopropanol in dem in der Tabelle 1 angegebenen Gewichtsverhältnis eingesetzt.

In den Beispielen 13-16 und in den Vergleichsbeispielen V17-V23 wurde die Messerdrehzahl auf den in der Tabelle 2 angegebenen Wert eingestellt. Dabei wurden Granulatgewichte von 2,8 mg (3000 Upm), 2,4 mg (3500 Upm) bzw. 3,3 mg (2500 Upm) erhalten, Vergleichsbeispiele V1 und V2

In den Vergleichsbeispiele V1 und V2 wurde die Temperatur der treibmittelhaltigen Polymerschmelze konstant gehalten und nicht gekühlt.

**Tabelle 1: Eingesetzte Rohstoffe für die Beispiele 1 - 12 und Vergleichsversuche V1 und V2 mit 100 Gew. % Feststoff und zusätzlich dem Treibmittel**

| Beispiel | E1010 [Gew.-%] | E2010 [Gew.-%] | E0510 [Gew.-%] | Mikrotalk IT extra [Gew.-%] | TiO2 [Gew.-%] | Graphit [Gew.-%] | Treibmittel [Gew.-%] | Treibmittelzusammensetzung |
|---|---|---|---|---|---|---|---|---|
| V1 | | 99,9 | | 0,1 | | | 8 | Aceton |
| V2 | | 99,9 | | 0,1 | | | 8 | Aceton |
| V3 | | 99,9 | | 0,1 | | | 8 | Aceton |
| 2 | | 99,9 | | 0,1 | | | 8 | Aceton |
| 3 | | 99,9 | | 0,1 | | | 8 | Aceton |
| 4 | 99,9 | | | | 0,1 | | 8 | Aceton |
| 5 | 89,9 | 10 | | | 0,1 | | 8 | Aceton |
| 6 | 79,9 | 20 | | | 0,1 | | 8 | Aceton |
| 7 | 69,9 | 30 | | | 0,1 | | 8 | Aceton |
| 8 | 49,5 | 49,5 | | | 1,0 | | 8 | Aceton |
| 9 | | 99,9 | | | 0,1 | | 8 | Aceton |
| 10 | 99,9 | | | | | 0.1 | 8 | Aceton |
| 11 | 99,5 | | | | | 0,5 | 8 | Aceton |
| 12 | 99,0 | | | | | 1,0 | 8 | Aceton |
| 13 | 99,0 | | | | 0,1 | | | Aceton/Wasser 4:1 |
| 14 | 99,0 | | | | 0,1 | | | Aceton/Wasser 5:1 |
| 15 | 99,0 | | | | 0,1 | | | Aceton/Isopropanol 4:1 |
| 16 | 99,0 | | | | 0,1 | | | Aceton/Ethanol 4:1 |
| V17 | 99,0 | | | | 0,1 | | | Aceton/Ethanol 4:1 |
| V18 | 99,0 | | | | 0,1 | | | Aceton/Ethanol 4:1 |
| V19 | 99,0 | | | | 0,1 | | 10 | Aceton |
| V20 | | 99,0 | | | 0,1 | | 10 | Aceton |
| V21 | 20 | 79,9 | | | 0,1 | | 10 | Aceton |
| V22 | 49,5 | 49,5 | | | 0,1 | | 10 | Aceton |
| 23 | 79,9 | 20 | | | 0,1 | | 10 | Aceton |
| 24 | V | 49,5 | 49,5 | | 0,1 | | 8 | Aceton |
| 25 | 49,5 | | 49,5 | | 0,1 | | 8 | Aceton |
| 26 | | | 99,0 | | 0,1 | | 8 | Aceton |

**Tabelle 2: Prozessparameter vom Extruder bis hin zur UWG**

| | Temperatur der Extruderzonen [°C] | | | | | | | | Schneckendrehzahl | ZRP | | AV | LP | UWG | | Durchsatz | MesserDrehzahl |
|---|---|---|---|---|---|---|---|---|---|---|---|---|---|---|---|---|---|
| | Z1 | Z2 | Z3 | Z4 | Z5 | Z6 | Z7 | Z8 | [Upm] | Temp [°C] | Druck [bar] | Temp [°C] | Temp [°C] | Temp [°C] | Druck [bar] | [g/h] | Upm |
| V1 | 340 | 340 | 340 | 340 | 340 | 340 | 340 | 340 | 320 | 280 | 70 | 320 | 350 | 95 | 13,2 | 5000 | 3600 |
| V2 | 340 | 340 | 340 | 340 | 340 | 340 | 340 | 340 | 320 | 280 | Bsp. | 320 | 350 | 95 | 13,4 | 5000 | 3600 |
| V3 | 340 | 340 | 340 | 340 | 320 | 255 | 255 | 255 | 240 | 280 | 63 | 270 | 350 | 95 | 13,4 | 5000 | 3600 |
| 2 | 340 | 340 | 340 | 340 | 320 | 220 | 215 | 215 | 215 | 265 | 75 | 265 | 350 | 95 | 13 | 5000 | 3600 |
| 3 | 340 | 340 | 340 | 340 | 320 | 220 | 215 | 215 | 215 | 265 | 75 | 265 | 350 | 95 | 13 | 5000 | 3600 |
| 4 | 340 | 340 | 340 | 340 | 300 | 205 | 205 | 205 | 215 | 265 | 100 | 265 | 340 | 95 | 13 | 5000 | 3600 |
| 5 | 340 | 340 | 340 | 340 | 300 | 205 | 205 | 205 | 215 | 265 | 100 | 265 | 340 | 95 | 13 | 5000 | 3600 |
| 6 | 340 | 340 | 340 | 340 | 300 | 205 | 205 | 205 | 215 | 265 | 100 | 265 | 340 | 95 | 13 | 5000 | 3600 |
| 7 | 340 | 340 | 340 | 340 | 300 | 205 | 205 | 205 | 215 | 265 | 100 | 265 | 340 | 95 | 13 | 5000 | 3600 |
| 8 | 340 | 340 | 340 | 340 | 320 | 225 | 225 | 215 | 215 | 265 | 75 | 265 | 340 | 78 | 13 | 5000 | 3600 |
| 9 | 340 | 340 | 340 | 340 | 320 | 225 | 225 | 215 | 215 | 265 | 75 | 265 | 340 | 78 | 13 | 5000 | 3600 |
| 10 | 340 | 340 | 340 | 340 | 320 | 225 | 225 | 215 | 215 | 265 | 75 | 265 | 340 | 78 | 13 | 5000 | 3600 |
| 11 | 340 | 340 | 340 | 340 | 320 | 225 | 225 | 215 | 215 | 265 | 75 | 265 | 340 | 78 | 13 | 5000 | 3600 |
| 12 | 340 | 340 | 340 | 340 | 320 | 225 | 225 | 215 | 215 | 265 | 75 | 265 | 340 | 78 | 13 | 5000 | 3600 |
| 13 | 340 | 340 | 340 | 340 | 300 | 205 | 205 | 205 | 215 | 265 | 100 | 265 | 340 | 95 | 13 | 5000 | 3000 |
| 14 | 340 | 340 | 340 | 340 | 300 | 205 | 205 | 205 | 215 | 265 | 100 | 265 | 340 | 95 | 13 | 5000 | 3000 |
| 15 | 340 | 340 | 340 | 340 | 300 | 205 | 205 | 205 | 215 | 265 | 100 | 265 | 340 | 80 | 13 | 5000 | 3000 |
| 16 | 340 | 340 | 340 | 340 | 300 | 205 | 205 | 205 | 215 | 265 | 100 | 265 | 340 | 80 | 13 | 5000 | 3000 |
| V17 | 340 | 340 | 340 | 320 | 233 | 195 | 190 | 190 | 190 | 250 | 100 | 225 | 265 | 67 | 13.8 | 5000 | 3000 |
| V18 | 340 | 340 | 340 | 320 | 233 | 195 | 190 | 190 | 190 | 250 | 100 | 225 | 265 | 67 | 13.8 | 5000 | 3000 |
| V19 | 340 | 340 | 340 | 320 | 233 | 195 | 190 | 190 | 190 | 250 | 100 | 225 | 265 | 67 | 13 | 5000 | 3500 |
| V20 | 320 | 340 | 340 | 320 | 275 | 210 | 205 | 205 | 215 | 260 | 110 | 225 | 240 | 58 | 14.5 | 5000 | 2500 |
| V21 | 320 | 340 | 340 | 320 | 275 | 210 | 205 | 205 | 215 | 260 | 110 | 225 | 240 | 57 | 14.6 | 5000 | 2500 |
| V22 | 320 | 340 | 340 | 320 | 275 | 210 | 205 | 205 | 215 | 260 | 110 | 225 | 240 | 57 | 14.6 | 5000 | 2500 |
| V23 | 320 | 340 | 340 | 320 | 275 | 210 | 190 | 205 | 215 | 260 | 110 | 225 | 240 | 57 | 14.7 | 5000 | 2500 |
| 24 | 340 | 340 | 340 | 340 | 300 | 205 | 205 | 205 | 215 | 265 | 100 | 265 | 340 | 95 | 13 | 5000 | 3600 |
| 25 | 340 | 340 | 340 | 340 | 300 | 205 | 205 | 205 | 215 | 265 | 100 | 265 | 340 | 95 | 13 | 5000 | 3600 |
| 26 | 340 | 340 | 340 | 340 | 300 | 205 | 205 | 205 | 215 | 265 | 100 | 265 | 340 | 95 | 13 | 5000 | 3600 |

**Tabelle 3: Schüttdichte der expandierbaren Granulate nach der Herstellung sowie die Treibmittelkonzentration in den expandierbaren Granulaten über die Lagerzeit.**

| Versuch | Schüttdichte (g/l) | Treibmittel (%) | | | | |
|---|---|---|---|---|---|---|
| | | injiziert | 1. Woche | 4. Woche | 8. Woche | 12. Woche |
| V1 | 329 | 8 | 6,9 | 6,3 | 5,1 | 4,6 |
| V2 | 269 | 8 | 7,1 | 5,5 | 4,6 | |
| V3 | 600 | 8 | 7,1 | 6,8 | 6,4 | 6,3 |
| 2 | 545 | 8 | 7,6 | 6,7 | 6,3 | |
| 3 | 546 | 8 | 7,9 | 6,7 | 6,2 | |

### Herstellung der PESU - Schaumstoffpartikel

Die expandierbaren Granulate aus den Beispielen 2-3 und Vergleichsbeispiel V3 wurden im Umluftofen wie folgt zu Schaumstoffpartikeln geschäumt.
1.) Der Ofen wird auf 230 °C gestellt da es sonst zu lange dauert bis die Temperatur von 220 °C erreicht wird und 2 Aluschalen (ca. 500 ml) in den Ofen gestellt um ebenfalls auf die Temperatur zu kommen.
2.) Nachdem der Ofen eine Temperatur von 225 °C anzeigt werden ca. 6 g expandierbare Granulate auf die beiden Aluschalen aufgeteilt indem die Ofentür geöffnet und die Granulate aus der Hand oder einem kleinen Plastikgefäß in die Aluschalen gekippt werden. Dabei wird darauf geachtet, dass die Partikel nicht auf einem Haufen liegen. Durch das Öffnen der Ofentür fällt die Temperatur im Ofen um ca. 5 °C auf 220 °C ab. Die eingestellten 230 °C bewirken auch, dass die Temperatur nicht weiter abfällt.
3.) Mit dem Schließen der Ofentür wird eine Stoppuhr gestartet und nach der definierten Zeit (hier 60 s und 120 s) wieder geöffnet und die Aluschälchen mit den expandierten Granulaten entnommen und auf den Labortisch zum Abkühlen gestellt werden.
4.) Sobald die Aluschälchen mit den Granulaten abgekühlt sind wird die Schüttdichte analog zu DIN ISO 697:1982 gemessen. Analog da ein Messbecher mit 50 ml Inhalt verwendet wird da die für die Messung exakt nach Norm zu viel Granulat geschäumt werden müsste.

Die gemessenen Schüttdichten nach dem Schäumen der expandierbaren Granulate in der 1. Woche ist in Tabelle 4 dargestellt.

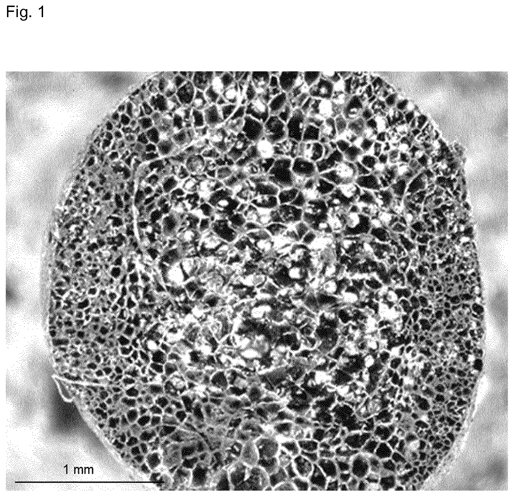

Fig. 1 zeigt einen Querschnitt mit der Zellverteilung durch ein auf eine Dichte von 81 g/l verschäumtes Schaumstoffpartikel nach Vergleichsbeispiel V3.

Der mittlere Zelldurchmesser betrug 64 µm.

99% der Zellen weisen einen Zelldurchmesser von weniger als 150 µm und 90% der Zellen weisen einen Zelldurchmesser von weniger als 110 µm auf. Das mittlere Länge/Breite-Verhältnis der Zellen betrug 1,4.

**Tabelle 4: Schüttdichten vor dem Schäumen und nach dem Schäumen 1. Woche**

| Beispiel | Schüttdichte vor dem Schäumen (g/l) | Schüttdichte nach dem Schäumen (g/l) | | |
|---|---|---|---|---|
| | | 220°C 30 s | 220 °C, 60 s | 220 °C, 120 s |
| V1 | 329 | | 280 | 266 |
| V2 | 244 | | 340 | |
| V3 | 600 | | 104 | 85 |
| 4 | 660 | 46 | 44 | 45 |
| 5 | 680 | 43 | 49 | 63 |
| 6 | 676 | 51 | 49 | 65 |
| 7 | 674 | 45 | 44 | 61 |
| 8 | 622 | 87 | 79 | 89 |
| 9 | 580 | 86 | 95 | 108 |
| 10 | 618 | 54 | 54 | 79 |
| 11 | 602 | 60 | 64 | 87 |
| 12 | 592 | 66 | 89 | 100 |
| 13 | 512 | 74 | 87 | 132 |
| 14 | 457 | 79 | 76 | 125 |
| 15 | 561 | 51 | 45 | 49 |
| 16 | 643 | 64 | 63 | 75 |
| V17 | 703 | 27 | 24 | 27 |
| V18 | 617 | 37 | 35 | 56 |
| V19 | 770 | 26 | 24 | 23 |
| V20 | 680 | 27 | 29 | 35 |
| V21 | 700 | 26 | 27 | 34 |
| V22 | 705 | 24 | 26 | 26 |
| V23 | 712 | 27 | 23 | 23 |
| 24 | 640 | 52 | 42 | 41 |
| 25 | 690 | 42 | 44 | 43 |
| 26 | 697 | 39 | 40 | 40 |

### Herstellung von PESU-Partikelschaumstoffplatten

Schaumstoffpartikel der Beispiele 19 ― 22 wurden in eine Form mit den Innenmaßen 200 x 300 x 12 mm eingefüllt und mittels Wasserdampf in einem Hochdruckformteilautomaten zu Schaumstoffplatten verschweißt. Dichte und Druckspannungen bei unterschiedlichen Stauchungen sind in Tabelle 5 zusammengestellt.

**Tabelle 5: Mechanische Eigenschaften von Schaumstoffplatten**

| Beispiel | Druckspannung bei 10 % Stauchung [kPa] | Druckspannung bei 25 % Stauchung [kPa] | Druckspannung bei 50 % Stauchung [kPa] | Dichte [g/L] | Dicke [mm] |
|---|---|---|---|---|---|
| V19 | 326 | 409 | 573 | 78 | 12 |
| | 152 | 206 | 311 | 50 | 12 |
| V20 | 434 | 597 | 898 | 80 | 12 |
| | 181 | 279 | 433 | 48 | 12 |
| V22 | 423 | 561 | 792 | 80 | 12 |
| | 156 | 297 | 440 | 45 | 12 |

## Patentansprüche

1. Verfahren zur Herstellung von expandierbaren, treibmittelhaltigen Granulaten auf Basis von Hochtemperaturthermoplasten umfassend die Stufen:
a) Herstellen einer Polymerschmelze durch Aufschmelzen von mindestens einem Polyethersulfon mit einer Glasübergangstemperatur nach ISO 11357-2-1999 von mindestens 180°C und Vermischen mit mindestens einem Nukleierungsmittel in einem Extruder bei Temperaturen im Bereich von 300° bis 350°C,
b) Zugabe eines Treibmittels zu der Polymerschmelze
c) Abkühlen der treibmittelhaltigen Polymerschmelze auf eine Temperatur im Bereich von 180° bis 250°C,
d) gegebenenfalls Fördern der Polymerschmelze über eine Zahnradpumpe
e) Fördern der treibmittelhaltigen Polymerschmelze bei einer Temperatur im Bereich von 180° bis 250°C durch eine Lochplatte und Granulieren der treibmittelbeladenen Polymerschmelze in einem bei einer Wassertemperatur im Bereich von 75 bis 99°C und einem Druck im Bereich von 10 bis 20 bar betriebenen Unterwassergranulator.

2. Verfahren nach Anspruch 1, **dadurch gekennzeichnet, dass** als Treibmittel Aceton, Isobutan, Ethanol, Isopropanol, Wasser oder Mischungen davon eingesetzt werden.

3. Verfahren nach Anspruch 1 oder 2, **dadurch gekennzeichnet, dass** als Nukleierungsmittel Talkum, Titandioxid, Graphit, Russ oder Mischungen davon eingesetzt werden.

4. Verfahren nach einem der Ansprüche 1 bis 3, **dadurch gekennzeichnet, dass** als Polymer Mischungen von Polyethersulfonen mit unterschiedlichem mittleren Molekulargewicht M_{w} eingesetzt werden.

5. Verfahren nach einem der Ansprüche 2 bis 4, **dadurch gekennzeichnet, dass** als Treibmittel 3 bis 10 Gew.-% Aceton, bezogen auf die Polymerschmelze, eingesetzt werden.

6. Verfahren nach einem der Ansprüche 3 bis 5, **dadurch gekennzeichnet, dass** als Nukleierungsmittel 0,01 bis 2,0 Gew.-% Talkum, Titandioxid, Graphit, Ruß oder Mischungen, bezogen auf die Polymerschmelze, eingesetzt werden.

7. Verfahren zur Herstellung von Partikelschaumstoffen, **dadurch gekennzeichnet, dass** man nach dem Verfahren der Ansprüche 1 bis 6 erhaltene expandierbare, treibmittelhaltige Granulate zu expandierten Schaumstoffpartikel mit einer Schüttdichte nach DIN ISO 697:1982 im Bereich von 10 bis 200 kg/m³ vorschäumt und in einer Form mittels Wasserdampf, Heißluft, IR- oder elektromagnetischer Strahlung oder Heißpressen verschweißt.

## Claims

1. A process for producing expandable, blowing agent-containing pellets based on high temperature thermoplastics comprising the steps of:
a) producing a polymer melt by melting at least one polyethersulfone having a glass transition temperature according to ISO 11357-2-1999 of at least 180°C and mixing with at least one nucleating agent in an extruder at temperatures in the range from 300°C to 350°C,
b) addition of a blowing agent to the polymer melt
c) cooling the blowing agent-containing polymer melt to a temperature in the range from 180°C to 250°C,
d) optionally conveying the polymer melt by means of a gear pump
e) conveying the blowing agent-containing polymer melt at a temperature in the range from 180°C to 250°C through a perforated plate and pelletizing the blowing agent-laden polymer melt in an underwater pelletizer operated at a water temperature in the range from 75°C to 99°C and a pressure in the range from 10 to 20 bar.

2. The process according to claim 1, wherein acetone, isobutane, ethanol, isopropanol, water or mixtures thereof are employed as the blowing agent.

3. The process according to claim 1 or 2, wherein talc, titanium dioxide, graphite, carbon black or mixtures thereof are employed as the nucleating agent.

4. The process according to any of claims 1 to 3, wherein mixtures of polyethersulfones having different average molecular weights M_{w} are employed as the polymer.

5. The process according to any of claims 2 to 4, wherein 3% to 10% by weight of acetone based on the polymer melt are employed as the blowing agent.

6. The process according to any of claims 3 to 5, wherein 0.01 % to 2.0% by weight, based on the polymer melt, of talc, titanium dioxide, graphite, carbon black or mixtures thereof are employed as the nucleating agent.

7. A process for producing particle foams, wherein expandable, blowing agent-containing pellets obtained according to the process of claims 1 to 6 are pre-foamed to afford expanded foam particles having a poured density according to DIN ISO 697:1982 in the range from 10 to 200 kg/m³ and welded in a mold using steam, hot air, IR or electromagnetic radiation or hot pressing.

## Revendications

1. Procédé pour la préparation de granulés expansibles, contenant un agent gonflant, à base de thermoplastiques haute température comprenant les étapes :
a) préparation d'une masse fondue de polymère par fusion d'au moins une polyéthersulfone dotée d'une température de transition vitreuse selon la norme ISO 11357- 2- 1999 d'au moins 180 °C et mélange avec au moins un agent de nucléation dans une extrudeuse à des températures dans la plage de 300° à 350 °C,
b) ajout d'un agent gonflant à la masse fondue de polymère
c) refroidissement de la masse fondue de polymère contenant un agent gonflant à une température dans la plage de 180° à 250 °C,
d) éventuellement transport de la masse fondue de polymère sur une pompe à engrenages
e) transport de la masse fondue de polymère contenant un agent gonflant à une température dans la plage de 180° à 250 °C à travers une plaque à trous et granulation de la masse fondue de polymère chargée d'un agent gonflant dans un granulateur sous-marin fonctionnant à une température de l'eau dans la plage de 75 à 99 °C et à une pression dans la plage de 10 à 20 bars.

2. Procédé selon la revendication 1, **caractérisé en ce que** de l'acétone, de l'isobutane, de l'éthanol, de l'isopropanol, de l'eau ou des mélanges correspondants sont utilisés en tant qu'agent gonflant.

3. Procédé selon la revendication 1 ou 2, **caractérisé en ce que** du talc, du dioxyde de titane, du graphite, de la suie ou des mélanges correspondants sont utilisés en tant qu'agent de nucléation.

4. Procédé selon l'une quelconque des revendications 1 à 3, **caractérisé en ce que** des mélanges de polyéthersulfones dotées d'un poids moléculaire moyen M_{w} différent sont utilisés en tant que polymère.

5. Procédé selon l'une quelconque des revendications 2 à 4, **caractérisé en ce que** 3 à 10 % en poids d'acétone, par rapport à la masse fondue de polymère, sont utilisés en tant qu'agent gonflant.

6. Procédé selon l'une quelconque des revendications 3 à 5, **caractérisé en ce que** 0,01 à 2,0 % en poids de talc, de dioxyde de titane, de graphite, de suie ou de mélanges, par rapport à la masse fondue de polymère, sont utilisés en tant qu'agent de nucléation.

7. Procédé pour la préparation de mousses particulaires, **caractérisé en ce qu'**on pré- mousse des granulés expansibles, contenant un agent gonflant, obtenus par le procédé des revendications 1 à 6, pour donner des particules de mousse expansées dotées d'une densité apparente selon la norme DIN ISO 697- 1982 dans la plage de 10 à 200 kg/m³ et qu'on les fusionne dans un moule au moyen de vapeur d'eau, d'air chaud, de rayonnement IR ou électromagnétique ou de pressage à chaud.
